# EUROPEAN PATENT APPLICATION

(11) **EP 4 063 839 A1**
(43) Date of publication of application: **28.09.2022**
(21) Application number: 20890404.5
(22) Date of filing: 20.11.2020
(51) Int. Cl.: G01N 23/20008, G01N 1/28

(54) **PREPARATION METHOD OF CRYSTAL STRUCTURE ANALYSIS SAMPLE FOR STRUCTURAL ANALYSIS USING CRYSTAL SPONGE METHOD**

(30) Priority: 21.11.2019 JP 2019210754; 03.03.2020 JP 2020036307
(71) Applicant: KIRIN HOLDINGS KABUSHIKI KAISHA, Nakano-ku, Tokyo 164-0001 (JP)
(72) Inventor: TANIGUCHI Yoshimasa, Tokyo 164-0001 (JP); MATSUMOTO Rie, Tokyo 164-0001 (JP)
(74) Representative: Hoffmann Eitle
(86) International application number: PCT/JP2020/043383
(87) International publication number: WO 2021/100852

(57) **Abstract**

An object of the present invention is to provide a method of preparing a sample for crystallographic analysis used for structure determination based on the crystalline sponge method. The present invention provides a method of preparing a sample for crystallographic analysis used for structure determination based on the crystalline sponge method, the method including the steps: (A) forming an ionic pair of a target compound of analysis with a counterionic compound, and (B) soaking the ionic pair of the compounds into a crystalline sponge, wherein the target compound of analysis is a basic compound or an acidic compound.

## Description

### CROSS-REFERENCE TO RELATED APPLICATIONS

This application enjoys the benefit of priority from the prior Japanese Patent Application Nos. 2019-210754 (filed on November 21, 2019) and 2020-036307 (filed on March 3, 2020), the entire disclosures of which are incorporated herein by reference.

### TECHNICAL FIELD

The present invention relates to a method of preparing a sample for crystallographic analysis used for structure determination based on the crystalline sponge method. The present invention also relates to a method of using the above preparation method for structural determination.

### BACKGROUND ART

Single crystal X-ray structural analysis is known as a technique for precisely determining the molecular structure of a substance, but application of this method has been limited in cases where, for example, a target substance of analysis is a less crystallizable substance. Recently, the "crystalline sponge method" has attracted attention as an innovative technique for structural determination by X-ray crystallography. The crystalline sponge method is very useful for allowing a substance of analysis as a guest to soak into pores of a porous single crystal called crystalline sponge and thereby to be stably placed in the pores extending regularly in three dimensions, which facilitates determination of the structure of the target substance by X-ray crystallography while the process of crystallization being bypassed (Patent Document 1).

However, some target substances of analysis are hard to soak into a crystalline sponge because of their properties, and disadvantageously this has caused a problem with a limited number of substances that can be analyzed by the crystalline sponge method. Although some progress has been made towards resolution of the problem by improving a crystalline sponge used, there still remains a room for improvement in the range of substances that can be analyzed (Non-Patent Document 1).

### REFERENCE LIST

### [PATENT DOCUMENT]

Patent Document 1: JP 5969616 B
[NON-PATENT DOCUMENT]

Non-Patent Document 1: F. Sakurai et al., Chem. Eur. J. 2017, 23, 15035-15040.

### SUMMARY OF THE INVENTION

An object of the present invention is to provide a new method of preparing a sample for crystallographic analysis used for structure determination based on the crystalline sponge method.

The inventors intensely studied a technique for preparing a sample for crystallography and have found that a basic compound which is not amenable to structural analysis based on the crystalline sponge method can be paired with an acidic compound for ionic pair formation and then soaked into a crystalline sponge to prepare a sample for crystallography. The inventors have also found that the structures of both the basic compound and the acidic compound in the ionic pair can be determined by structural analysis of the sample for crystallography. The inventors have further found that the same method can be applied to structural analysis of an acidic compound which is not amenable to structural analysis based on the crystalline sponge method. The present invention is based on the above findings.

The present invention provides the following inventions.
[1] A method of preparing a sample for crystallographic analysis used for structure determination based on the crystalline sponge method, the method comprising the steps: (A) forming an ionic pair of a target compound of analysis with a counterionic compound, and (B) soaking the ionic pair of the compounds into a crystalline sponge, wherein the target compound of analysis is a basic compound or an acidic compound.
[2] The method according to [1], wherein the target compound of analysis is a basic compound, and wherein the basic compound forms an ionic pair with an acidic compound in the step (A).
[3] The method according to [1], wherein the target compound of analysis is an acidic compound, and wherein the acidic compound forms an ionic pair with a basic compound in the step (A).
[4] The method according to any of [1] to [3], wherein the step (A) and the step (B) are performed sequentially or simultaneously.
[5] A method of determining the structure of a target compound of analysis, the method comprising the steps of: performing the preparation method according to any of [1] to [4] to prepare a sample for crystallographic analysis; and performing structural analysis of the prepared sample for crystallographic analysis.

Advantageously, the methods of the invention allow the structure (particularly, absolute configuration) of a compound which is not amenable to structural analysis based on the crystalline sponge method to be quickly and precisely determined by a simple procedure.

### BRIEF DESCRIPTION OF THE DRAWINGS

FIG. 1 shows a result (in the asymmetric unit; solvent molecules are omitted) from crystallographic analysis of (1*R*,2*R*)-2-(cyclopropylamino)cyclohexanol, a target compound of analysis, based on the CS method.
FIG. 2 shows a result (in the asymmetric unit; solvent molecules are omitted) from crystallographic analysis of methanesulfonic acid, a target compound of analysis, based on the CS method.
FIG. 3 shows a result (in the asymmetric unit; solvent molecules are omitted) from crystallographic analysis of trifluoroacetic acid, a target compound of analysis, based on the CS method.
FIG. 4 shows a result (in the asymmetric unit; solvent molecules are omitted) from crystallographic analysis of a sample for crystallography based on the CS method, wherein the sample is prepared by formation of an ionic pair between (1*R*,2*R*)-2-(cyclopropylamino)cyclohexanol as a target compound of analysis and methanesulfonic acid as a counterionic compound.
FIG. 5 shows an enlarged view of a part of the crystal structure enclosed by a dotted line in FIG. 4.
FIG. 6 shows a result (in the asymmetric unit; solvent molecules are omitted) from crystallographic analysis of a sample for crystallography based on the CS method, wherein the sample is prepared by formation of an ionic pair between (1*R*,2*R*)-2-(cyclopropylamino)cyclohexanol as a target compound of analysis and trifluoromethanesulfonic acid as a counterionic compound.
FIG. 7 shows an enlarged view of a part of the crystal structure enclosed by a dotted line in FIG. 6.
FIG. 8 shows a result (in the asymmetric unit; solvent molecules are omitted) from crystallographic analysis of a sample for crystallography based on the CS method, wherein the sample is prepared by formation of an ionic pair between 2-phenylethylamine as a target compound of analysis and trifluoromethanesulfonic acid as a counterionic compound.
FIG. 9 shows an enlarged view of a part of the crystal structure enclosed by a dotted line in FIG. 8.
FIG. 10 shows a result (in the asymmetric unit; solvent molecules are omitted) from crystallographic analysis of a sample for crystallography based on the CS method, wherein the sample is prepared by formation of an ionic pair between 2-phenylethylamine as a target compound of analysis and trifluoroacetic acid as a counterionic compound.
FIG. 11 shows an enlarged view of a part of the crystal structure enclosed by a dotted line in FIG. 10.
FIG. 12 shows a result (in the asymmetric unit; solvent molecules are omitted) from crystallographic analysis of a sample for crystallography based on the CS method, wherein the sample is prepared by formation of an ionic pair between *rac-trans*-2-(phenethylamino)cyclopentan-1-ol as a target compound of analysis and trifluoromethanesulfonic acid as a counterionic compound.
FIG. 13 shows an enlarged view of a part of the crystal structure enclosed by a dotted line in FIG. 12.
FIG. 14 shows a result (chromatogram) from analyzing *rac-trans*-2-(phenethylamino)cyclopentan-1-ol by HPLC.
FIG. 15 shows a result (in the asymmetric unit; solvent molecules are omitted) from crystallographic analysis of a sample for crystallography based on the CS method, wherein the sample is prepared by formation of an ionic pair between a compound corresponding to Peak 1 in FIG. 14 as a target compound of analysis and trifluoromethanesulfonic acid as a counterionic compound.
FIG. 16 shows an enlarged view of a part of the crystal structure enclosed by a dotted line in FIG. 15.
FIG. 17 shows a result (in the asymmetric unit; solvent molecules are omitted) from crystallographic analysis of a sample for crystallography based on the CS method, wherein the sample is prepared by formation of an ionic pair between a compound corresponding to Peak 2 in FIG. 14 as a target compound of analysis and trifluoromethanesulfonic acid as a counterionic compound.
FIG. 18 shows an enlarged view of a part of the crystal structure enclosed by a dotted line in FIG. 17.
FIG. 19 shows a result (chromatogram) from analyzing *rac-trans*-2-(phenethylamino)cycloheptan-1-ol by HPLC.
FIG. 20 shows a result (in the asymmetric unit; solvent molecules are omitted) from crystallographic analysis of a sample for crystallography based on the CS method, wherein the sample is prepared by formation of an ionic pair between a compound corresponding to Peak 3 in FIG. 19 as a target compound of analysis and trifluoromethanesulfonic acid as a counterionic compound.
FIG. 21 shows an enlarged view of a part of the crystal structure enclosed by a dotted line in FIG. 20.
FIG. 22 shows a result (in the asymmetric unit; solvent molecules are omitted) from crystallographic analysis of a sample for crystallography based on the CS method, wherein the sample is prepared by formation of an ionic pair between a compound corresponding to Peak 4 in FIG. 19 as a target compound of analysis and trifluoromethanesulfonic acid as a counterionic compound.
FIG. 23 shows an enlarged view of a part of the crystal structure enclosed by a dotted line in FIG. 22.
FIG. 24 shows a result (in the asymmetric unit; solvent molecules are omitted) from crystallographic analysis of N,N-dimethylcyclohexylamine, a target compound of analysis, based on the CS method.
FIG. 25 shows a result (in the asymmetric unit; solvent molecules are omitted) from crystallographic analysis of a sample for crystallography based on the CS method, wherein the sample is prepared by formation of an ionic pair between N,N-dimethylcyclohexylamine as a target compound of analysis and trifluoromethanesulfonic acid as a counterionic compound.
FIG. 26 shows an enlarged view of a part of the crystal structure enclosed by a dotted line in FIG. 25.
FIG. 27 shows a result (in the asymmetric unit; solvent molecules are omitted) from crystallographic analysis of a sample for crystallography based on the CS method, wherein the sample is prepared by formation of an ionic pair between 1,1,3,3-tetramethylguanidine as a target compound of analysis and trifluoromethanesulfonic acid as a counterionic compound.
FIG. 28 shows an enlarged view of a part of the crystal structure enclosed by a dotted line in FIG. 27.
FIG. 29 shows a result (in the asymmetric unit; solvent molecules are omitted) from crystallographic analysis of a sample for crystallography based on the CS method, wherein the sample is prepared by formation of an ionic pair between 1,3-diphenylguanidine as a target compound of analysis and trifluoromethanesulfonic acid as a counterionic compound.
FIG. 30 shows an enlarged view of a part of the crystal structure enclosed by a dotted line in FIG. 29.
FIG. 31 shows a result (in the asymmetric unit; solvent molecules are omitted) from crystallographic analysis of a sample for crystallography based on the CS method, wherein the sample is prepared by formation of an ionic pair between diazabicycloundecene as a target compound of analysis and trifluoromethanesulfonic acid as a counterionic compound.
FIG. 32 shows an enlarged view of a part of the crystal structure enclosed by a dotted line in FIG. 31.

### DETAIL DESCRIPTION OF THE INVENTION

The present invention is a method for preparing a sample for crystallography used for structural analysis of a target compound of analysis. The method of the invention comprises a step (A) of forming an ionic pair of a target compound of analysis with a counterionic compound, and a step (B) of soaking the ionic pair of the compounds into a crystalline sponge.

In the step (A) of the method according to the invention, the target compound of analysis is allowed to form an ionic pair with a counterionic compound. In this respect, the "ionic pair" refers to a combination of two oppositely charged compounds, such as a combination of a cationic compound and an anionic compound. Moreover, the "counterionic compound" refers to a compound with an opposite charge to the target compound of analysis.

In the method of the invention, the target compound of analysis can be either a basic compound or an acidic compound. Preferably, the target compound of analysis is an organic compound.

The basic compound is a compound with one or more functional groups that individually act as a proton (H⁺) acceptor, preferably a compound with lone pair electrons. The basic compound to be analyzed is not specifically limited but includes nitrogen-containing compounds (for example, nitrogen-containing aromatic compounds, nitrogen-containing aliphatic compounds, and the like), such as primary amines, secondary amines, tertiary amines, guanidine, amidine, pyridine, and pyrrole.

The acidic compound is a compound with one or more functional groups that individually act as a proton (H⁺) donor, preferably a compound capable of releasing a proton (H⁺). The acidic compound to be analyzed is not specifically limited but includes, for example, acidic compounds such as carboxylic acids, sulfonic acids, and organic phosphoric acids.

The target compound of analysis is preferably a compound which is not amenable to structural analysis based on the crystalline sponge method because of the influence of reactivity of the compound (for example, destruction of a crystalline sponge) or the influence of molecular structure or molecular size of the compound (for example, incompatible interaction with the framework of a crystalline sponge). For example, many basic compounds are nucleophilic compounds and can be analyzed by the method of the invention. Additionally, the target compound of analysis by the method of the invention can be a compound that interacts with the framework of a crystalline sponge so weakly that the compound is not regularly held in pores, or on the contrary, so strongly that the compound is only allowed to move in a limited space near the entrance of pores and is unevenly distributed inside the pores, which causes a difficulty in analysis of the compound, among basic and acidic compounds.

In the method of the invention, a target compound of analysis can be paired with an acidic compound in the step (A) for ionic pair formation when the target compound of analysis is a basic compound. Any acidic compound can be selected as the compound that forms an ionic pair with the target compound of analysis, and the acidic compound can be selected such that the ionic pair formed between the compounds is small enough in size to pass through the pores of a crystalline sponge (standard pore size: 10 Å × 10 Å). Moreover, the acidic compound can also be selected considering the interaction (for example, π-π bond, CH-π bond, hydrogen bond, halogen-π bond, or the like) with a polymer metal complex used in the framework structure of a crystalline sponge.

In the method of the invention, a target compound of analysis can be paired with a basic compound in the step (A) for ionic pair formation when the target compound of analysis is an acidic compound. Any basic compound can be selected as the compound that forms an ionic pair with the target compound of analysis, and the basic compound can be selected such that the ionic pair formed between the compounds is small enough in size to pass through the pores of a crystalline sponge (standard pore size: 10 Å × 10 Å). Moreover, the basic compound can also be selected considering the interaction (for example, π-π bond, CH-π bond, hydrogen bond, halogen-π bond, or the like) with a polymer metal complex used in the framework structure of a crystalline sponge.

In cases where the target compound of analysis in the method of the invention is a compound with functional groups that individually act as either a proton (H⁺) acceptor or a proton (H⁺) donor in the molecule, an ionic pair may be formed by adding a counterionic compound that reacts with either of the functional groups or by adding counterionic compounds that react with both the functional groups. Moreover, in cases where the target compound of analysis contains multiple functional groups that individually act as a proton (H⁺) acceptor or multiple functional groups that individually act as a proton (H⁺) donor, a counterionic compound that reacts with only some of the functional groups or counterionic compounds that react with all the functional groups may be added.

An ionic pair can be formed by mixing a target compound of analysis and a counterionic compound in a solvent that can dissolve both the compounds. The solvent is not specifically limited as long as both the compounds can be dissolved and mixed in the solvent, and examples of the solvent include aliphatic hydrocarbons (for example, *n*-hexane, pentane, heptane, octane, nonane, decane, cyclopentane, cyclohexane, and the like), aromatic hydrocarbons (for example, benzene, toluene, xylene, and the like), halogenated hydrocarbons (for example, chloroform, dichloromethane, chloromethane, dichloroethane, chloroethane, and the like), ethers (for example, diethyl ether, dimethyl ether, methyl tert-butyl ether, tetrahydrofuran, and the like), esters (for example, methyl acetate, ethyl acetate, methyl formate, ethyl formate, and the like), ketones (for example, acetone, methyl ethyl ketone, pentanone, and the like), alcohols (for example, methanol, ethanol, propanol, butanol, pentanol, hexanol, and the like), nitriles (for example, acetonitrile, and the like), amides (for example, dimethylformamide, dimethylacetamide, and the like), dimethyl sulfoxide or water, and a combination of the above solvents in any blending ratio. In cases where the step (A) and the step (B) are performed sequentially or simultaneously as described below, the solvent can be selected considering the step of soaking in a crystalline sponge (Step B). In other words, when a solvent is selected for formation of an ionic pair with a target compound of analysis, it is desirable to consider the potential of the solvent to damage or dissolve a crystalline sponge depending on the combination of the type of the crystalline sponge used and the composition of the solvent in which the crystalline sponge is soaked because such damage to or dissolution of a crystalline sponge may compromise the function of the crystalline sponge in the crystalline sponge method.

For the mixing between a target compound of analysis and a counterionic compound, the target compound of analysis and the counterionic compound can be added to a solvent to yield arbitrary concentrations, provided that the concentrations are enough to allow formation of an ionic pair. However, it is preferable that both the compounds are added to a solvent to yield equimolar concentrations. Moreover, the ionic pair formation may be simultaneous with the soaking in a crystalline sponge in the step (B) described below. In other words, the step (A) and the step (B) can be performed simultaneously by separately dissolving the target compound of analysis and the counterionic compound in a solvent and adding the resulting solutions sequentially or simultaneously to a crystalline sponge.

In the step (B), the target compound of analysis in the ionic pair formed in the step (A) is soaked into a crystalline sponge to prepare a sample for crystallography. In this respect, the crystalline sponge is a single crystal material with three-dimensionally regular porous structures and can be made, for example, from metal-organic frameworks (MOFs), covalent organic frameworks (COFs), inorganic compounds, such as zeolites, or the like. However, the source of the single crystal material is not limited, provided that a compound is incorporated as a guest into pores of the single crystal material. An example of the crystalline sponge composed of a metal-organic framework is a polymer metal complex with a three-dimensional network structure, which is composed of a ligand with two or more coordination sites and a metal ion as a coordination center. The "three-dimensional network structure" as used herein refers to a network structure composed of repeating structural units, extending in three dimensions, each unit formed by a ligand (a ligand with two or more coordination sites or any of other monodentate ligands) and a metal ion bound thereto.

A single crystal metal-organic framework that can be used as a crystalline sponge is described in the following literature: for example, Nature 2013, 495, 461-466; Chem. Commun. 2015, 51, 11252-11255; Science 2016, 353, 808-811; Chem. Commun. 2016, 52, 7013-7015; Chem. Asian J. 2017, 12, 208-211; J. Am. Chem. Soc. 2017, 139, 11341-11344; and JP 5969616 B. A [(ZnX₂)₃(tpt)₂·(solvent)_{a]n}-type crystalline sponge (wherein X represents a halogen atom such as chlorine, bromine, iodine, or fluorine, and "tpt" represents 2,4,6-tri(4-pyridyl)-1,3,5-triazine, and "solvent" represents a solvent confined in pores and other structures, and "a" represents a number of not less than 0, and "n" represents a positive integer; the same applies below) described, for example, in Nature 2013, 495, 461-466 and Chem. Commun. 2015, 51, 11252-11255 is preferred, and a [(ZnCl₂)₃(tpt)₂·(solvent)_{a]n}-type crystalline sponge is more preferred, in consideration of convenience for single crystal preparation.

For the production of a sample for crystallography, the method for soaking the target compound of analysis, a member of the formed ionic pair, into a crystalline sponge for incorporation of the target compound as a guest into pores is not specifically limited, as long as the method allows the target compound to be incorporated as a guest into pores. For example, the target compound of analysis can be incorporated as a guest into pores by a method described in the following literature: for example, IUCrJ 2016, 3, 139-151; Chem. Eur. J. 2017, 23, 15035-15040; CrystEngComm, 2017, 19, 4528-4534; Org. Lett. 2018, 20, 3536-3540; Science 2016, 353, 808-811; and Chem. Commun. 2015, 51, 11252-11255. For example, the target compound of analysis can be incorporated into cavities in the three-dimensional network structure of a crystalline sponge by soaking the compound into the crystalline sponge at a temperature of 0 to 120°C for a period of 0.5 hours to 14 days.

Another aspect of the present invention provides a method of determining the structure of a target compound of analysis, wherein the method comprises a step of performing structural analysis of a sample for crystallography obtained by performing the method of the invention for preparation of a sample for crystallography. Any technique selected from X-ray diffraction, neutron diffraction, and electron diffraction may be used for the structural analysis of the sample for crystallography. Additionally, the measurement data, or the structure of the target compound of analysis, can be analyzed by a known method, such as a method described in WO 2014/038220 or in IUCrJ 2016, 3, 139-151.

Advantageously, the method of the invention allows for the structural analysis of a target compound of analysis even if the compound is not amenable to crystallographic analysis based on the crystalline sponge method due to the properties of the compound in the unmodified state. In addition, it is another advantage that the method of the invention allows for simultaneous performance of the ionic pair formation and the soaking in a crystalline sponge, which enables quick analysis by a simple procedure.

### EXAMPLES

The present invention will be specifically described in more detail by examples below, but the present invention is not limited to those examples.

### (Crystalline Sponge)

A [(ZnCl₂)₃(tpt)₂·(*n*-hexane)ₐ]ₙ-type crystalline sponge prepared according to the method described in Non-Patent Document 1 was used in the examples.

### (Single Crystal X-Ray Structural Analysis)

In the examples, single crystal X-ray structural analysis was performed using a single crystal X-ray diffractometer Synergy-R (Rigaku Corporation). The data was acquired using a radiation source of Cu Kα (λ = 1.5418 Å) at a measurement temperature of 100 K. The diffraction data was analyzed according to the method described in Non-Patent Document 1.

### Example 1: X-Ray Structural Analysis Based on the Crystalline Sponge Method (1)

In Example 1, the crystalline sponge method was evaluated for applicability to crystallographic analysis of basic and acidic compounds.

### (1) Target Compounds of Analysis

Target compounds of analysis in Example 1 are as shown in Table 1.

**Table 1: Target compounds of analysis**

| | | |
|---|---|---|
| Comparative Example 1 | Basic compounds | (1*R*,2*R*)-2-(cyclopropylamino)cyclohexanol (^{∗}) |
| Comparative Example 2 | | (1*R*,2*R*)-2-(cyclopropylamino)cyclohexanol (^{∗}) |
| Comparative Example 3 | | 2-phenylethylamine (Tokyo Chemical Industry Co., Ltd.) |
| Comparative Example 4 | | *rac*-*trans*-2-(phenethylamino)cyclopentan-1-ol (^{∗∗}) |
| Comparative Example 5 | Acidic compounds | trifluoromethanesulfonic acid (Tokyo Chemical Industry Co., Ltd.) |
| Comparative Example 6 | | methanesulfonic acid (Tokyo Chemical Industry Co., Ltd.) |
| Comparative Example 7 | | trifluoroacetic acid (Tokyo Chemical Industry Co., Ltd.) |

| | | |
|---|---|---|
| ^{∗}: produced by a known method (Bull. Chem. Soc. Jpn. 2018, 91, 678-683). ^{∗∗}: produced by a known method (WO 2015/194508). | | |

### (2) Experimental Procedure

### A. Comparative Examples 1 and 3 to 5

In Comparative Examples 1 and 3 to 5, one granule of the crystalline sponge and *n*-hexane (45 µL) were added together to a 1.2-mL V-bottom vial. A target compound of analysis was dissolved in dimethoxyethane to a concentration of 1 mg/mL, and 5 µL of the resulting solution (equivalent to 5 µg of the target compound of analysis) was added to the above vial containing the crystalline sponge. The vial was capped and sealed and then incubated at 50°C for 1 day. One day later, the crystalline sponge was recovered from the solution, coated with an inert oil layer, and then analyzed with a single crystal X-ray diffractometer.

### B. Comparative Example 2

In Comparative Example 2, one granule of the crystalline sponge and *n*-hexane (45 µL) were added together to a 1.2-mL V-bottom vial. A target compound of analysis was dissolved in dimethoxyethane to a concentration of 1 mg/mL, and 1 µL of the resulting solution (equivalent to 1 µg of the target compound of analysis) was added to the above vial containing the crystalline sponge. The vial was capped and sealed, and the cap was pierced with an injection needle, and the vial was incubated at 4°C for 5 days to gently evaporate the solvent. Five days later, the crystalline sponge was recovered from the vial, coated with an inert oil layer, and then analyzed with a single crystal X-ray diffractometer.

### C. Comparative Example 6

In Comparative Example 6, one granule of the crystalline sponge and *n*-hexane (45 µL) were added together to a 1.2-mL V-bottom vial. A target compound of analysis was dissolved in dimethoxyethane to a concentration of 1 mg/mL, and 5 µL of the resulting solution (equivalent to 5 µg of the target compound of analysis) was added to the above vial containing the crystalline sponge. The vial was capped and sealed and then incubated at 50°C for 2 days. Two days later, the crystalline sponge was recovered from the solution, coated with an inert oil layer, and then analyzed with a single crystal X-ray diffractometer.

### D. Comparative Example 7

In Comparative Example 7, one granule of the crystalline sponge and *n*-hexane (45 µL) were added together to a 1.2-mL V-bottom vial. A target compound of analysis was dissolved in dimethoxyethane to a concentration of 1 mg/mL, and 5 µL of the resulting solution (equivalent to 5 µg of the target compound of analysis) was added to the above vial containing the crystalline sponge. The vial was capped and sealed, and the cap was pierced with an injection needle, and the vial was incubated at 50°C for 1 day to gently evaporate the solvent. One day later, the crystalline sponge was recovered from the vial, coated with an inert oil layer, and then analyzed with a single crystal X-ray diffractometer.

### (3) Results

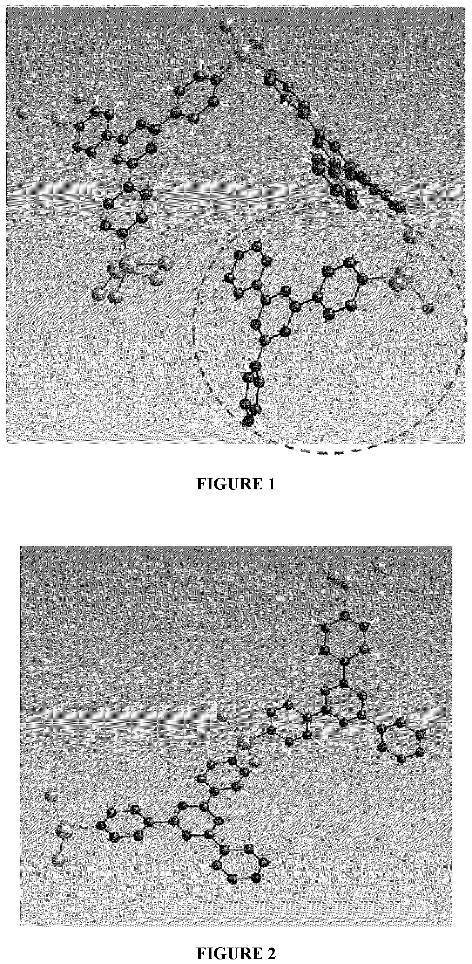

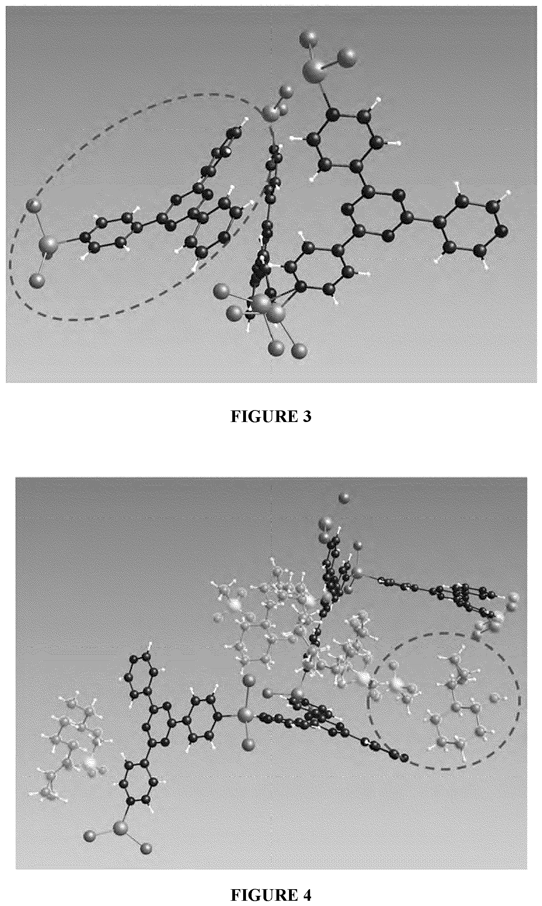

The results from the X-ray crystallographic analysis of the target compounds analyzed in Comparative Examples 1, 6, and 7 were as shown in FIGS. 1, 2, and 3, respectively, which indicated failure in observing the crystal structures of the target compounds of analysis. In Comparative Examples 1 and 7, degradation products from the framework of the crystalline sponge were observed to be incorporated as a guest, as shown in a region enclosed by a dotted line in FIGS. 1 and 3. In Comparative Example 6, only the framework of the crystalline sponge was observed as seen in FIG. 2, which suggest that the target compound of analysis was not held in pores of the crystalline sponge. Additionally, the results from the X-ray crystallographic analysis of the target compounds analyzed in Comparative Example 2 (the temperature and time conditions employed in Comparative Example 1 for soaking in a crystalline sponge were changed to milder conditions as described in Non-Patent Document 1) and Comparative Examples 3 and 4 were similar to that in Comparative Example 1, which indicated failure in observing the crystal structures of the target compounds of analysis (data not shown). In Comparative Example 5, the crystalline sponge was found to be dissolved in the solution one day after incubation and not to exist as a crystal, and the crystalline sponge was thus not subjected to the X-ray analysis. Without being bound by the following theory, it was understood that these resulted from destruction of the crystalline sponge-constituting framework due to the reactivity (nucleophilicity, coordinating property, and the like) of the basic or acidic compounds as targets of analysis or from incompatible interaction between the target compounds of analysis and the crystalline sponge.

In Non-Patent Document 1, the [(ZnCl₂)₃(tpt)₂·(*n*-hexane)ₐ]ₙ-type crystalline sponge is described to be suitable for analysis of nitrogen-containing compounds, but the results of Comparative Examples 1 to 4 indicated that there are practically many examples of basic compounds that are not amenable to crystallographic analysis based on the crystalline sponge method due to the reactivity (nucleophilicity, coordinating property, and the like) of the target compounds of analysis. Additionally, the results of Comparative Examples 5 to 7 indicated that there are examples of acidic compounds that are not amenable to crystallographic analysis based on the crystalline sponge method due to the reactivity of the compounds, and furthermore that there are examples of acidic compounds that are amenable to crystallographic analysis due to the incompatible interaction with a crystalline sponge.

### Example 2: X-Ray Structural Analysis of a Compound in an Ionic Pair (2)

In Example 2, the crystalline sponge method was evaluated for applicability to crystallographic analysis of target compounds of analysis, following ionic pair formation with counterionic compounds.

### (1) Ionic pairs

Target compounds of analysis and counterionic compounds for ionic pair formation in Example 2 are as shown in Table 2.

**Table 2: Ionic pairs**

| | Target compound of analysis (basic compound) | Counterion (acidic compound) | Crystallographic data | Crystal structure | Crystal structure (enlarged view) |
|---|---|---|---|---|---|
| Practical Example 1 | (1*R*,2*R*)-2-(cyclopropylamino)cyclohexanol 1 mg/mL [the concentration at the time of mixing and dissolving] 5 µg [the amount at the time of soaking in crystalline sponge] | methanesulfonic acid 0.5 mg/mL [the concentration at the time of mixing and dissolving] 2.5 µg [the amount at the time of soaking in crystalline sponge] | Table 3 | FIG. 4 | FIG. 5 |
| Practical Example 2 | (1*R*,2*R*)-2-(cyclopropylamino)cyclohexanol 1 mg/mL [the concentration at the time of mixing and dissolving] 5 µg [the amount at the time of soaking in crystalline sponge] | trifluoromethanesulfonic acid 1 mg/mL [the concentration at the time of mixing and dissolving] 5 µg [the amount at the time of soaking in crystalline sponge] | Table 4 | FIG. 6 | FIG. 7 |
| Practical Example 3 | 2-phenylethylamine 1 mg/mL [the concentration at the time of mixing and dissolving] 5 µg [the amount at the time of soaking in crystalline sponge] | trifluoromethanesulfonic acid 1.3 mg/mL [the concentration at the time of mixing and dissolving] 6.5 µg [the amount at the time of soaking in crystalline sponge] | Table 5 | FIG. 8 | FIG. 9 |
| Practical Example 4 | 2-phenylethylamine 1 mg/mL [the concentration at the time of mixing and dissolving] 5 µg [the amount at the time of soaking in crystalline sponge] | trifluoroacetic acid 1 mg/mL [the concentration at the time of mixing and dissolving] 5 µg [the amount at the time of soaking in crystalline sponge] | Table 6 | FIG. 10 | FIG. 11 |
| Practical Example 5 | *rac*-*trans*-2-(phenethylamino)cyclopentan-1-ol 1 mg/mL [the concentration at the time of mixing and dissolving] 5 µg [the amount at the time of soaking in crystalline sponge] | trifluoromethanesulfonic acid 0.7 mg/mL [the concentration at the time of mixing and dissolving] 3.5 µg [the amount at the time of soaking in crystalline sponge] | Table 7 | FIG. 12 | FIG. 13 |

### (2) Experimental Procedure

### A. Practical Examples 1, 2, and 5

In Practical Examples 1, 2, and 5, one granule of the crystalline sponge and *n-*hexane (45 µL) were added together to a 1.2-mL V-bottom vial. A target compound of analysis and a counterion were both mixed and dissolved in dimethoxyethane to yield the concentrations shown in Table 2, and 5 µL of the resulting solution was added to the above vial containing the crystalline sponge. The vial was capped and sealed and then incubated at 50°C for 2 days. Two days later, the crystalline sponge was recovered from the solution, coated with an inert oil layer, and then analyzed with a single crystal X-ray diffractometer.

### B. Practical Examples 3 and 4

In Practical Examples 3 and 4, one granule of the crystalline sponge and *n-*hexane (45 µL) were added together to a 1.2-mL V-bottom vial. A target compound of analysis and a counterion were both mixed and dissolved in dimethoxyethane to yield the concentrations shown in Table 2, and 5 µL of the resulting solution was added to the above vial containing the crystalline sponge. The vial was capped and sealed, and the cap was pierced with an injection needle, and the vial was incubated at 50°C for 1 day to gently evaporate the solvent. One day later, the crystalline sponge was recovered from the vial, coated with an inert oil layer, and then analyzed with a single crystal X-ray diffractometer.

### (3) Results

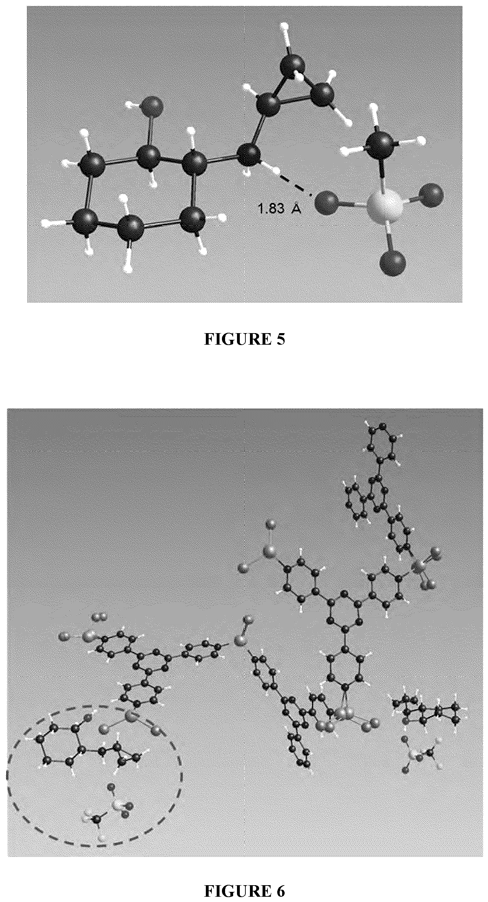

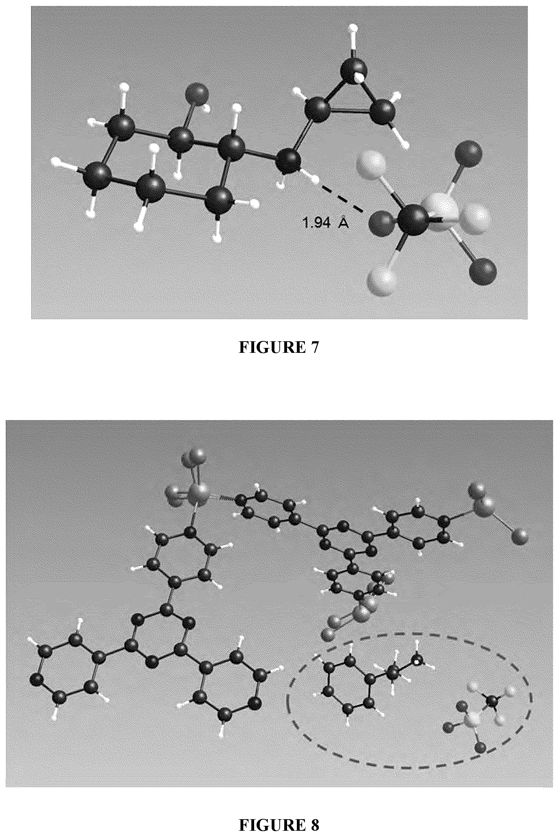

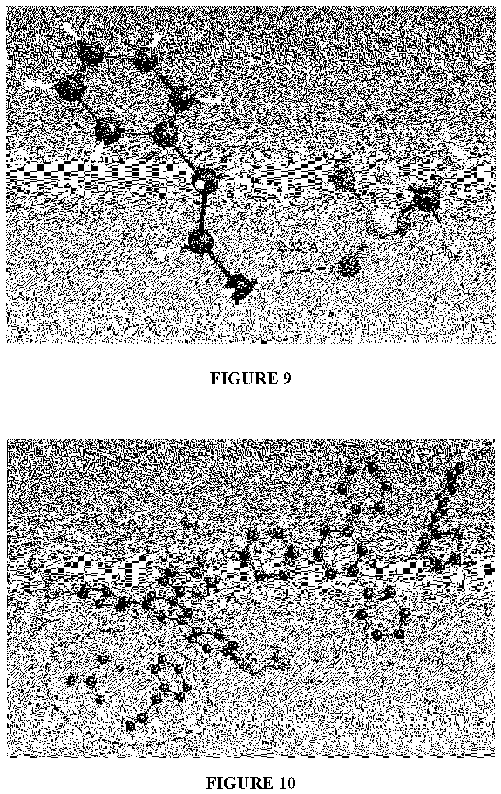

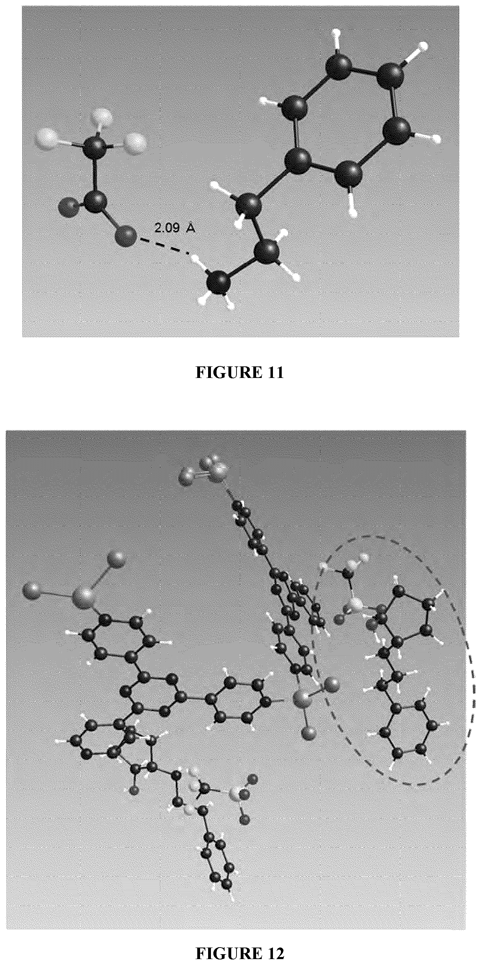

The crystallographic data and X-ray crystal structure (in the asymmetric unit) of each of the practical examples were as shown in Tables 3 to 7 and in FIGS. 4, 6, 8, 10, and 12 (enlarged views of the crystal structures are shown in FIGS. 5, 7, 9, 11, and 13), respectively. In any of the practical examples, the crystal structures of a basic compound added as a target compound of analysis and of an acidic compound added as a counterion were observed. The basic compounds and the acidic compounds were understood to stay in proximity to each other as ionic pairs and to be incorporated as ionic pairs into pores of the crystalline sponge. It is suggested that the framework of the crystalline sponge was prevented from degradation by masking the reactivity of the basic compounds, or alternatively by masking the reactivity of the acidic compounds, and this allowed for crystallographic observation of the target compounds of analysis.

**Table 3: Crystallographic Data (Practical Example 1)**

| Crystal system | Monoclinic |
|---|---|
| a (A) | 32.9394(2) |
| b (Å) | 14.4644(1) |
| c (Å) | 31.3590(2) |
| β (°) | 101.055(1) |
| V (Å³) | 14663.70(17) |
| Z | 4 |
| Space group | C2 |
| Rint | 0.0228 |
| Ri | 0.0617 |
| wR2 | 0.1923 |
| GoF | 1.089 |
| Flack parameter (Parsons) | 0.088(6) |

**Table 4: Crystallographic Data (Practical Example 2)**

| Crystal system | Monoclinic |
|---|---|
| a (A) | 33.14256(13) |
| b (Å) | 14.49914(4) |
| c (Å) | 30.99391(10) |
| β (°) | 100.8389(4) |
| V (Å³) | 14628.06(9) |
| Z | 4 |
| Space group | C2 |
| Rint | 0.0201 |
| Ri | 0.0610 |
| wR2 | 0.1879 |
| GoF | 1.102 |
| Flack parameter (Parsons) | 0.037(4) |

**Table 5: Crystallographic Data (Practical Example 3)**

| Crystal system | Monoclinic |
|---|---|
| a (A) | 32.6800(2) |
| b (Å) | 14.4136(1) |
| c (Å) | 31.4683(2) |
| β (°) | 101.258(1) |
| V (Å³) | 14537.50(17) |
| Z | 8 |
| Space group | C2/c |
| Rint | 0.0169 |
| R₁ | 0.0710 |
| wR2 | 0.2377 |
| GoF | 1.078 |

**Table 6: Crystallographic Data (Practical Example 4)**

| Crystal system | Monoclinic |
|---|---|
| a (A) | 32.8055(4) |
| b (Å) | 14.3860(1) |
| c (Å) | 32.7018(4) |
| β (°) | 103.215(1) |
| V (Å³) | 15024.6(3) |
| Z | 8 |
| Space group | C2/c |
| Rint | 0.0263 |
| R₁ | 0.1026 |
| wR2 | 0.3353 |
| GoF | 1.082 |

**Table 7: Crystallographic Data (Practical Example 5)**

| Crystal system | Monoclinic |
|---|---|
| a (A) | 32.8449(2) |
| b (Å) | 14.4015(1) |
| c (Å) | 31.8571(2) |
| β (°) | 101.926(1) |
| V (Å³) | 14743.65(17) |
| Z | 8 |
| Space group | C2/c |
| Rint | 0.0196 |
| R₁ | 0.0730 |
| wR2 | 0.2422 |
| GoF | 1.071 |

### Example 3: Structure Determination of Enantiomers [Optical Resolution of Enantiomers (Practical Example 6) and Structural Analysis of Enantiomers (Practical Examples 7 and 8)]

In Example 3, the crystalline sponge method was evaluated for applicability to crystallographic analysis of enantiomers of a target compound of analysis, following ionic pair formation shown in Table 9.

### (1) Method

### A. Optical Resolution

*Rac*-*trans*-2-(phenethylamino)cyclopentan-1-ol was optically resolved into a pair of enantiomers under the conditions shown in Table 8.

**Table 8: HPLC conditions**

| Column | CHIRALPAK AD-H (4.6 mm × 250 mm, particle size: 5 µm) |
|---|---|
| Column temperature | 35°C |
| Mobile phase | *n*-hexane/isopropanol/diethylamine 95/5/0.1 (v/v/v) |
| Flow rate | 1.2 mL/min |
| Detection | UV 254 nm |
| Injection volume | 10 µL |
| Sample concentration | 20 mg/mL |
| Analysis time | 12 minutes |

### B. Structure Determination

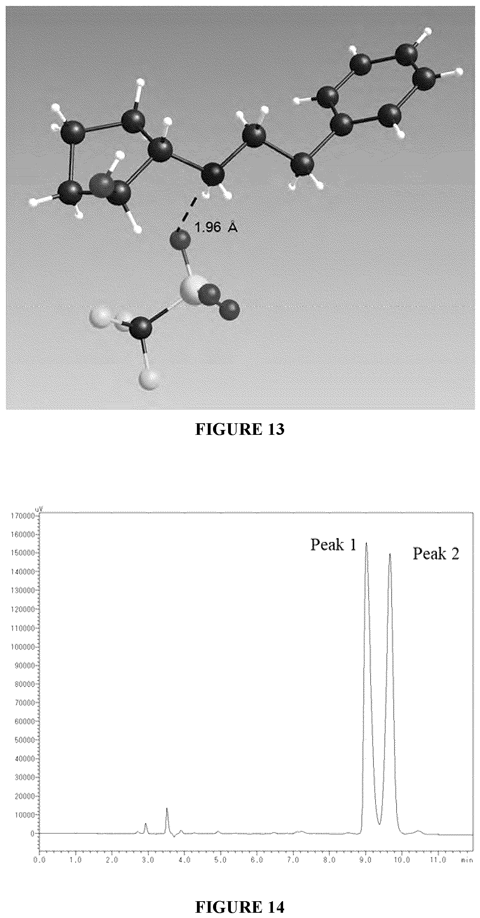

One granule of the crystalline sponge and *n*-hexane (45 µL) were added together to a 1.2-mL V-bottom vial. A compound corresponding to the early peak (Peak 1) in FIG. 14 and trifluoromethanesulfonic acid were both mixed and dissolved in dimethoxyethane to concentrations of 1 mg/mL and 0.7 mg/mL, respectively, and 5 µL of the resulting solution (equivalent to 5 µg of the compound of Peak 1 and 3.5 µg of trifluoromethanesulfonic acid) was added to the above vial containing the crystalline sponge. The vial was capped and sealed and then incubated at 50°C for 2 days. Two days later, the crystalline sponge was recovered from the solution, coated with an inert oil layer, and then analyzed with a single crystal X-ray diffractometer. A compound corresponding to the later peak (Peak 2) in FIG. 14 was analyzed under the same conditions as those for the compound of Peak 1.

**Table 9: Ionic pairs**

| | Taget compoun d of analysis (basic compoun d) | Counterionic compound (acidic compound) | Cry stall ograph ic data | Crystal structur e | Crystal structur e (enlarge d view) |
|---|---|---|---|---|---|
| Practic al Exampl e 7 | Compoun d of Peak 1 | trifluoromethanesulfo nic acid | Table 10 | FIG. 15 | FIG. 16 |
| Practic al Exampl e 8 | Compoun d of Peak 2 | trifluoromethanesulfo nic acid | Table 11 | FIG. 17 | FIG. 18 |

### (2) Result

The result of the optical resolution was as shown in the chromatogram of FIG. 14.

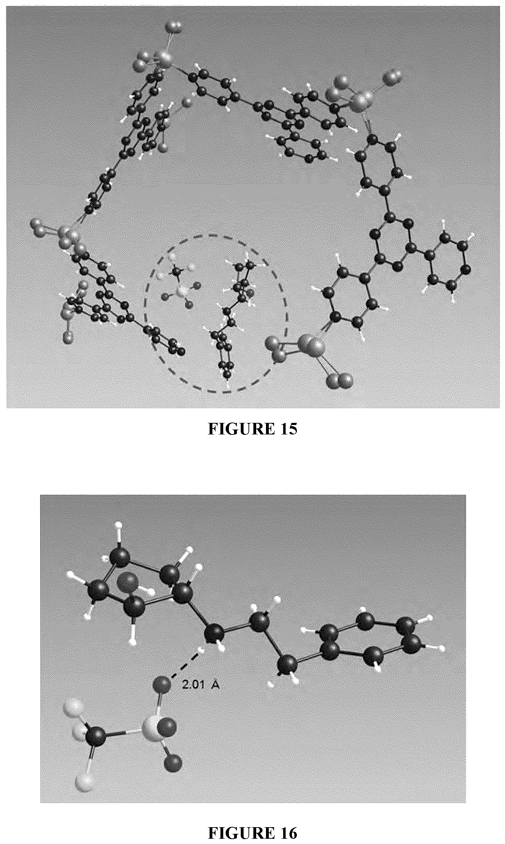

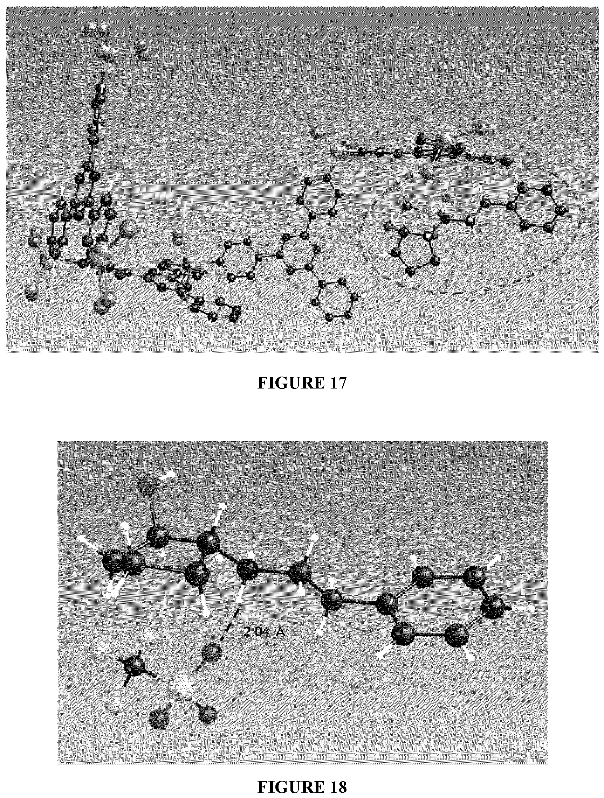

The crystallographic data and X-ray crystal structures (in the asymmetric unit) of the compounds of Peak 1 and Peak 2 were as shown in Tables 10 and 11 and in FIGS. 15 and 17 (enlarged views of the crystal structures are shown in FIGS. 16 and 18), respectively. The crystal structures of both the compounds were observed. The target compounds of analysis and trifluoromethanesulfonic acid as a counterion to the compounds were understood to stay in proximity to each other as ionic pairs and to be incorporated as ionic pairs into pores of the crystalline sponge. It is suggested that the framework of the crystalline sponge was prevented from degradation by masking the reactivity of the basic compound, or alternatively by masking the reactivity of the acidic compound, and this allowed for crystallographic observation of the target compound of analysis.

From the analysis result, the compounds of Peak 1 and Peak 2 were determined to have the structures of (1*S*,2*S*)-2-(phenethylamino)cyclopentan-1-ol and (1*R*,2*R*)-2-(phenethylamino)cyclopentan-1-ol, respectively.

**Table 10: Crystallographic Data (compound of Peak 1)**

| Crystal system | Monoclinic |
|---|---|
| a (A) | 32.88483(10) |
| b (Å) | 14.39898(3) |
| c (Å) | 31.69071(9) |
| β (°) | 101.7528(3) |
| V (Å³) | 14691.22(7) |
| Z | 4 |
| Space group | C2 |
| Rint | 0.0226 |
| Ri | 0.0571 |
| wR2 | 0.1879 |
| GoF | 1.077 |
| Flack parameter (Parsons) | 0.099(4) |

**Table 11: Crystallographic Data (compound of Peak 2)**

| Crystal system | Monoclinic |
|---|---|
| a (A) | 32.86021(9) |
| b (Å) | 14.40160(3) |
| c (Å) | 31.69286(8) |
| β (°) | 101.7291(2) |
| V (Å³) | 14685.15(6) |
| Z | 4 |
| Space group | C2 |
| Rint | 0.0215 |
| R₁ | 0.0549 |
| wR2 | 0.1787 |
| GoF | 1.072 |
| Flack parameter (Parsons) | 0.092(4) |

### Example 4: Structure Determination of Enantiomers [Optical Resolution of Enantiomers (Practical Example 9) and Structural Analysis of Enantiomers (Practical Examples 10 and 11)]

In Example 4, the crystalline sponge method was evaluated for applicability to crystallographic analysis of enantiomers of a target compound of analysis, following ionic pair formation shown in Table 12.

### (1) Method

### A. Optical Resolution

*Rac*-*trans*-2-(phenethylamino)cycloheptan- 1 -ol produced by a known method (WO 2015/194508) was optically resolved into a pair of enantiomers under the conditions in Table 8 for Example 3.

### B. Structure Determination

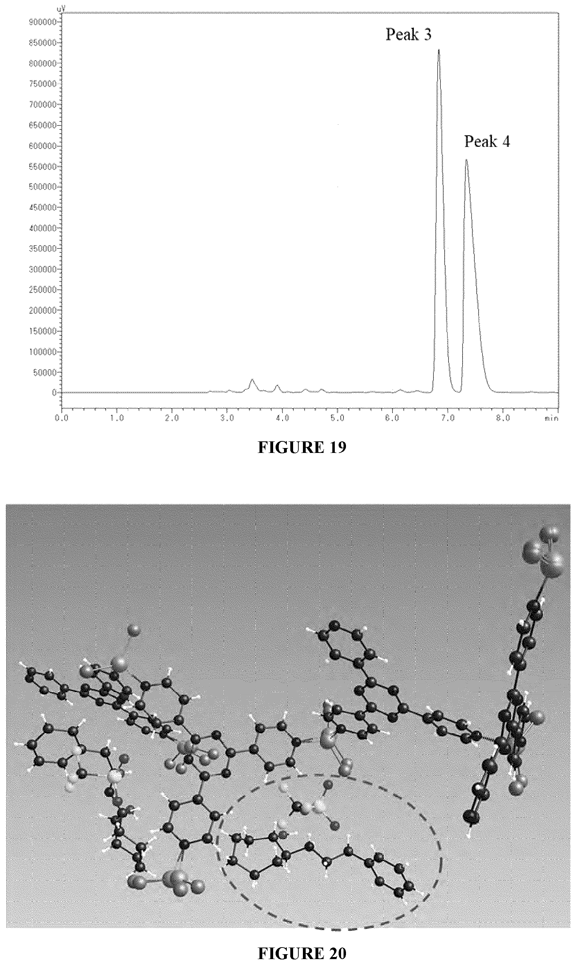

One granule of the crystalline sponge and *n*-hexane (45 µL) were added together to a 1.2-mL V-bottom vial. A compound corresponding to the early peak (Peak 3) in FIG. 19 and trifluoromethanesulfonic acid were both mixed and dissolved in dimethoxyethane to concentrations of 1 mg/mL and 0.7 mg/mL, respectively, and 5 µL of the resulting solution (equivalent to 5 µg of the compound of Peak 3 and 3.5 µg of trifluoromethanesulfonic acid) was added to the above vial containing the crystalline sponge. The vial was capped and sealed and then incubated at 50°C for 2 days. Two days later, the crystalline sponge was recovered from the solution, coated with an inert oil layer, and then analyzed with a single crystal X-ray diffractometer. A compound corresponding to the later peak (Peak 4) in FIG. 19 was analyzed under the same conditions as those for the compound of Peak 3.

**Table 12: Ionic pairs**

| | Target compoun d of analysis (basic compoun d) | Counterion (acidic compound) | Cry stall ograph ic data | Crystal structur e | Crystal structur e (enlarge d view) |
|---|---|---|---|---|---|
| Practic al Exampl e 10 | Compoun d of Peak 3 | trifluoromethanesulfo nic acid | Table 13 | FIG. 20 | FIG. 21 |
| Practic al Exampl e 11 | Compoun d of Peak 4 | trifluoromethanesulfo nic acid | Table 14 | FIG. 22 | FIG. 23 |

### (2) Result

The result of the optical resolution was as shown in the chromatogram of FIG. 19.

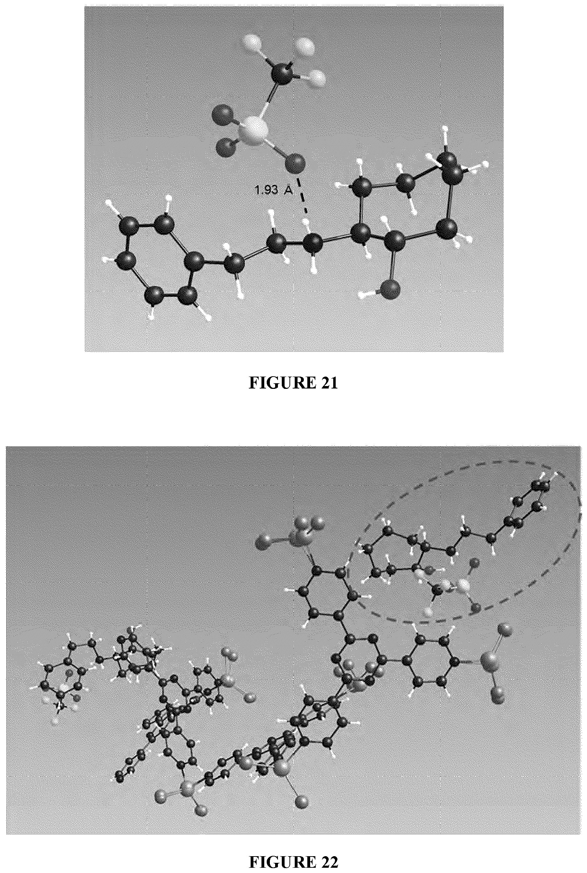

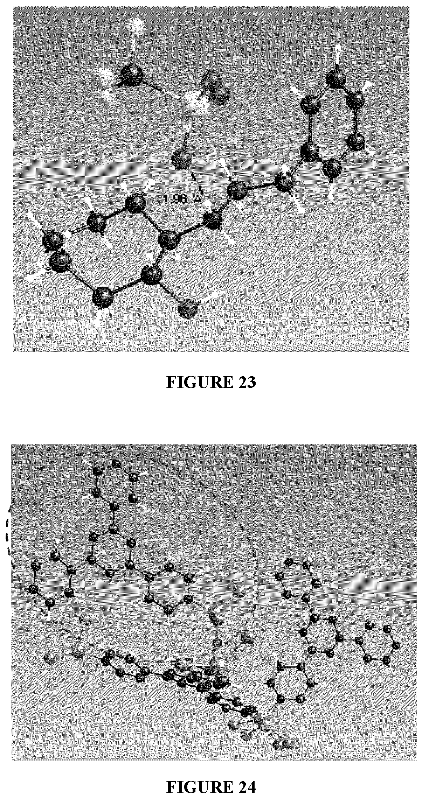

The crystallographic data and X-ray crystal structures (in the asymmetric unit) of the compounds of Peak 3 and Peak 4 were as shown in Tables 13 and 14 and in FIGS. 20 and 22 (enlarged views of the crystal structures are shown in FIGS. 21 and 23), respectively. The crystal structures of both the compounds were observed. The target compounds of analysis and trifluoromethanesulfonic acid were understood to stay in proximity to each other as ionic pairs and to be incorporated as ionic pairs into pores of the crystalline sponge. It is suggested that the framework of the crystalline sponge was prevented from degradation by masking the reactivity of the basic compound, or alternatively by masking the reactivity of the acidic compound, and this allowed for crystallographic observation of the target compound of analysis.

From the analysis result, the compounds of Peak 3 and Peak 4 were determined to have the structures of (1*S*,2*S*)-2-(phenethylamino)cycloheptan-1-ol and (1*R*,2*R*)-2-(phenethylamino)cycloheptan-1-ol, respectively.

**Table 13: Crystallographic Data (compound of Peak 3)**

| Crystal system | Monoclinic |
|---|---|
| a (A) | 32.65890(11) |
| b (Å) | 14.43287(4) |
| c (Å) | 31.47521(12) |
| β (°) | 101.4063(3) |
| V (Å³) | 14543.18(9) |
| Z | 4 |
| Space group | C2 |
| Rint | 0.0175 |
| R₁ | 0.0652 |
| wR2 | 0.2114 |
| GoF | 1.055 |
| Flack parameter (Parsons) | 0.055(4) |

**Table 14: Crystallographic Data (compound of Peak 4)**

| Crystal system | Monoclinic |
|---|---|
| a (A) | 32.62130(11) |
| b (Å) | 14.43883(4) |
| c (Å) | 31.51628(11) |
| β (°) | 101.4006(3) |
| V (Å³) | 14551.69(8) |
| Z | 4 |
| Space group | C2 |
| Rint | 0.0167 |
| R₁ | 0.0610 |
| wR2 | 0.1943 |
| GoF | 1.060 |
| Flack parameter (Parsons) | 0.049(5) |

### Example 5: X-Ray Structural Analysis Based on the Crystalline Sponge Method (2)

In Example 5, the crystalline sponge method was evaluated for applicability to crystallographic analysis of basic compounds.

### (1) Target Compounds of Analysis

Target compounds of analysis in Example 5 are as shown in Table 15.

**Table 15: Target compounds of analysis**

| | | |
|---|---|---|
| Comparative Example 8 | Basic compounds | N,N-dimethylcyclohexylamine (Tokyo Chemical Industry Co., Ltd.) |
| Comparative Example 9 | | 1,1,3,3-tetramethylguanidine (Tokyo Chemical Industry Co., Ltd.) |
| Comparative Example 10 | | 1,3-diphenylguanidine (Tokyo Chemical Industry Co., Ltd.) |
| Comparative Example 11 | | diazabicycloundecene (Tokyo Chemical Industry Co., Ltd.) |

### (2) Experimental Procedure

In Comparative Examples 8 to 11, one granule of the crystalline sponge and *n*-hexane (45 µL) were added together to a 1.2-mL V-bottom vial. A target compound of analysis was dissolved in dimethoxyethane to a concentration of 1 mg/mL, and 5 µL of the resulting solution (equivalent to 5 µg of the target compound of analysis) was added to the above vial containing the crystalline sponge. The vial was capped and sealed, and the cap was pierced with an injection needle, and the vial was incubated at 50°C for 1 day to gently evaporate the solvent. One day later, the crystalline sponge was recovered from the vial, coated with an inert oil layer, and then analyzed with a single crystal X-ray diffractometer.

### (3) Results

The result from the X-ray crystallographic analysis of the target compound analyzed in Comparative Example 8 was as shown in FIG. 24, which indicated failure in observing the crystal structure of the target compound of analysis. In Comparative Example 8, degradation products from the framework of the crystalline sponge were observed to be incorporated as a guest, as shown in a region enclosed by a dotted line in FIG. 24. In Comparative Examples 9, 10, and 11, the crystalline sponge was damaged and the crystallinity was completely lost, and diffraction data was thus not obtained. Without being bound by the following theory, it was understood that these resulted from destruction of the crystalline sponge-constituting framework due to the reactivity (nucleophilicity, coordinating property, and the like) of the basic compounds as targets of analysis. Additionally, the results indicated that, for example, tertiary amines (Comparative Example 8), guanidines (Comparative Examples 9 and 10), and amidines (Practical Example 11) may not be amenable to structural analysis due to the potential to cause significant damage to crystalline sponges in spite of the relatively low nucleophilicity of the compounds.

### Example 6: X-Ray Structural Analysis of a Compound in an Ionic Pair (2)

In Example 6, the crystalline sponge method was evaluated for applicability to crystallographic analysis of target compounds of analysis, following ionic pair formation with counterionic compounds.

### (1) Ionic pairs

Target compounds of analysis and counterionic compounds for ionic pair formation in Example 6 are as shown in Table 16.

**Table 16: Ionic pairs**

| | Target compound of analysis (basic compound) | Counterionic compound (acidic compound) | Crystallographic data | Crystal structure | Crystal structure (enlarged view) |
|---|---|---|---|---|---|
| Practical Example 12 | N,N-dimethylcyclohexylamine 1 mg/mL [the concentration at the time of mixing and dissolving] 5 µg [the amount at the time of soaking in crystalline sponge] | trifluoromethanesulfonic acid 1.2 mg/mL [the concentration at the time of mixing and dissolving] 6 µg [the amount at the time of soaking in crystalline sponge] | Table 17 | FIG. 25 | FIG. 26 |
| Practical Example 13 | 1,1,3,3 -tetramethylguanidine 1 mg/mL [the concentration at the time of mixing and dissolving] 5 µg [the amount at the time of soaking in crystalline sponge] | trifluoromethanesulfonic acid 1.4 mg/mL [the concentration at the time of mixing and dissolving] 7 µg [the amount at the time of soaking in crystalline sponge] | Table 18 | FIG. 27 | FIG. 28 |
| Practical Example 14 | 1,3-diphenylguanidine 1 mg/mL [the concentration at the time of mixing and dissolving] 5 µg [the amount at the time of soaking in crystalline sponge] | trifluoromethanesulfonic acid 0.8 mg/mL [the concentration at the time of mixing and dissolving] 4 µg [the amount at the time of soaking in crystalline sponge] | Table 19 | FIG. 29 | FIG. 30 |
| Practical Example 15 | diazabicycloundecene 1 mg/mL [the concentration at the time of mixing and dissolving] 5 µg [the amount at the time of soaking in crystalline sponge] | trifluoromethanesulfonic acid 1 mg/mL [the concentration at the time of mixing and dissolving] 5 µg [the amount at the time of soaking in crystalline sponge] | Table 20 | FIG. 31 | FIG. 32 |

### (2) Experimental Procedure

### A. Practical Examples 12 and 15

In Practical Examples 12 and 15, one granule of the crystalline sponge and *n-*hexane (45 µL) were added together to a 1.2-mL V-bottom vial. A target compound of analysis and a counterion were both mixed and dissolved in dimethoxyethane to yield the concentrations shown in Table 16, and 5 µL of the resulting solution was added to the above vial containing the crystalline sponge. The vial was capped and sealed, and the cap was pierced with an injection needle, and the vial was incubated at 50°C for 1 day to gently evaporate the solvent. One day later, the crystalline sponge was recovered from the vial, coated with an inert oil layer, and then analyzed with a single crystal X-ray diffractometer.

### B. Practical Examples 13 and 14

In Practical Examples 13 and 14, one granule of the crystalline sponge and *n-*hexane (45 µL) were added together to a 1.2-mL V-bottom vial. A target compound of analysis and a counterion were both mixed and dissolved in dimethoxyethane to yield the concentrations shown in Table 16, and 5 µL of the resulting solution was added to the above vial containing the crystalline sponge. The vial was capped and sealed and then incubated at 50°C for 3 days (Practical Example 13) or for 4 days (Practical Example 14). Subsequently, the crystalline sponge was recovered from the solution, coated with an inert oil layer, and then analyzed with a single crystal X-ray diffractometer.

### (3) Results

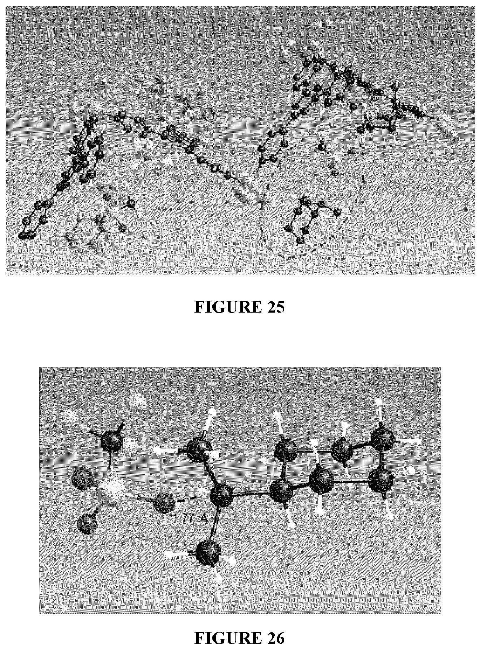

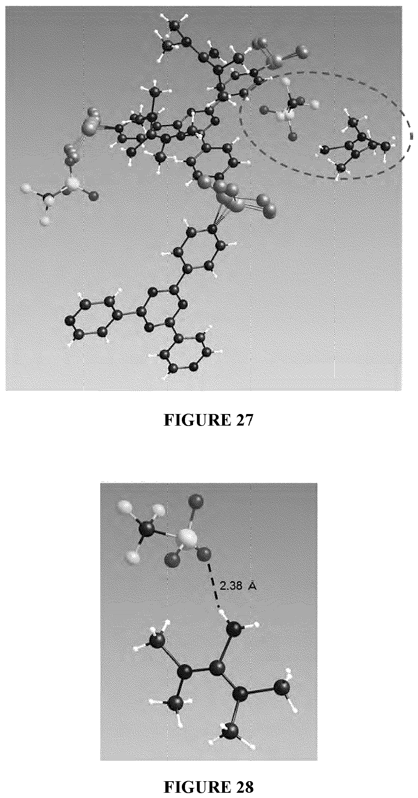

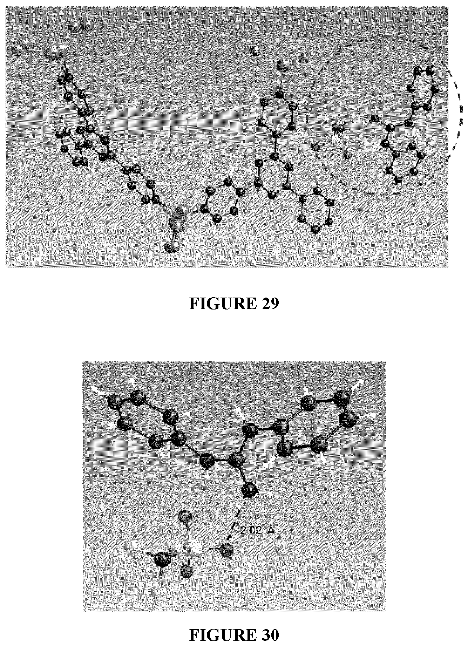

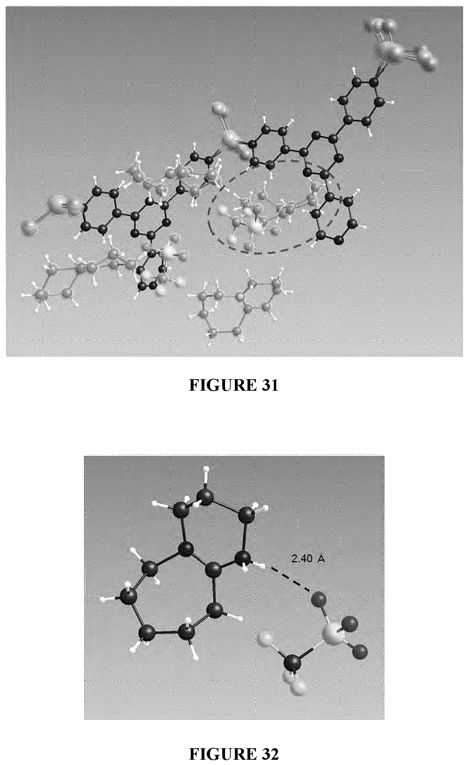

The crystallographic data and X-ray crystal structure (in the asymmetric unit) of each of the practical examples were as shown in Tables 17 to 20 and in FIGS. 25, 27, 29, and 31 (enlarged views of the crystal structures are shown in FIGS. 26, 28, 30, 32), respectively. In any of the practical examples, the crystal structures of a basic compound added as a target compound of analysis and of an acidic compound added as a counterion were observed. The basic compounds and the acidic compounds were understood to stay in proximity to each other as ionic pairs and to be incorporated as ionic pairs into pores of the crystalline sponge. It is suggested that the framework of the crystalline sponge was prevented from degradation by masking the reactivity of the basic compounds, and this allowed for crystallographic observation of the target compounds of analysis.

**Table 17: Crystallographic Data (Practical Example 12)**

| Crystal system | Monoclinic |
|---|---|
| a (A) | 30.0720(5) |
| b (Å) | 14.64415(18) |
| c (Å) | 33.1881(4) |
| β (°) | 100.2173(14) |
| V (Å³) | 14383.6(3) |
| Z | 4 |
| Space group | P2₁/n |
| Rint | 0.0301 |
| R₁ | 0.1212 |
| wR2 | 0.3621 |
| GoF | 1.105 |

**Table 18: Crystallographic Data (Practical Example 13)**

| Crystal system | Monoclinic |
|---|---|
| a (A) | 34.3570(5) |
| b (Å) | 14.4761(2) |
| c (Å) | 30.3158(4) |
| β (°) | 102.809(1) |
| V (Å³) | 14702.5(4) |
| Z | 8 |
| Space group | C2/c |
| Rint | 0.0219 |
| R₁ | 0.0979 |
| wR2 | 0.2993 |
| GoF | 1.030 |

**Table 19: Crystallographic Data (Practical Example 14)**

| Crystal system | Monoclinic |
|---|---|
| a (A) | 33.2049(5) |
| b (Å) | 14.4213(2) |
| c (Å) | 30.9613(6) |
| β (°) | 101.095(2) |
| V (Å³) | 14549.0(4) |
| Z | 8 |
| Space group | C2/c |
| Rint | 0.0215 |
| R₁ | 0.0856 |
| wR2 | 0.2600 |
| GoF | 1.113 |

**Table 20: Crystallographic Data (Practical Example 15)**

| Crystal system | Monoclinic |
|---|---|
| a (A) | 32.2091(3) |
| b (Å) | 14.5751(2) |
| c (Å) | 30.9842(4) |
| β (°) | 100.263(1) |
| V (Å³) | 145312.8(3) |
| Z | 8 |
| Space group | C2/c |
| Rint | 0.0308 |
| R₁ | 0.0913 |
| wR2 | 0.2960 |
| GoF | 1.106 |

## Claims

1. A method of preparing a sample for crystallographic analysis used for structure determination based on the crystalline sponge method, the method comprising the steps: (A) forming an ionic pair of a target compound of analysis with a counterionic compound, and (B) soaking the ionic pair of the compounds into a crystalline sponge, wherein the target compound of analysis is a basic compound or an acidic compound.

2. The method according to claim 1, wherein the target compound of analysis is a basic compound, and wherein the basic compound forms an ionic pair with an acidic compound in the step (A).

3. The method according to claim 1, wherein the target compound of analysis is an acidic compound, and wherein the acidic compound forms an ionic pair with a basic compound in the step (A).

4. The method according to any one of claims 1 to 3, wherein the step (A) and the step (B) are performed sequentially or simultaneously.

5. A method of determining the structure of a target compound of analysis, the method comprising the steps of: performing the preparation method according to any one of claims 1 to 4 to prepare a sample for crystallographic analysis; and performing structural analysis of the prepared sample for crystallographic analysis.
